# EUROPEAN PATENT SPECIFICATION

(11) **EP 1 873 036 B1**
(45) Date of publication and mention of the grant of the patent: **22.02.2012**
(21) Application number: 07017952.8
(22) Date of filing: 03.05.2007
(51) Int. Cl.: B61G 11/16, F16F 7/12, B61D 15/06, B61D 17/06

(54) **Collision energy absorbing device and railway vehicle comprising such a device**
Vorrichtung zur Absorption von Kollisionsenergie und Schienenfahrzeug mit der Vorrichtung
Dispositif d'absorption d'énergie de collision et véhicule ferroviaire comportant ce dispositif

(30) Priority: 10.05.2006 JP 2006131978; 10.05.2006 JP 2006131979; 10.05.2006 JP 2006131980; 25.12.2006 JP 2006348382; 31.01.2007 JP 2007021270; 31.01.2007 JP 2007021271
(43) Date of publication of application: 02.01.2008
(62) Divisional of application: 07251860.8
(73) Proprietor: Hitachi, Ltd., Chiyoda-ku Tokyo 100-8280 (JP)
(72) Inventor: Mochida, Toshihiko c/o Hitachi, Ltd., IP Group, Tokyo 100-8220 (JP); Miyamoto, Toshiharu c/o Hitachi, Ltd., IP Group, Tokyo 100-8220 (JP); Yamaguchi, Takashi c/o Hitachi, Ltd., IP Group, Tokyo 100-8220 (JP)
(74) Representative: Paget, Hugh Charles Edward

(56) References cited:
- EP-A1- 1 215 098
- WO-A-2006/024059
- DE-B- 1 279 709
- DE-U- 1 743 253
- DE-U1- 9 311 041
- DE-U1- 29 722 844
- US-B1- 6 820 759

## Description

### BACKGROUND OF THE INVENTION

### Field of the Invention

The present invention relates to a railway vehicle having an impact energy absorbing device, and is applied to a railway vehicle such as a railroad car or a monorail car in particular. The impact energy absorbing device is provided for the purpose of reducing an impact received at the time of collision against an obstacle.

### Description of the Related Art

During running of a railway vehicle typified by a railroad car, there is a possibility of collision against an unexpected object. For example, in railroad car collision instances in the past, unexpected colliding objects include large objects such as road vehicles, trees and railroad cars, small objects such as stones, snow masses, parts of cars running in the opposite direction, and other various kinds of object.

A case where a railroad car collides against a large object will be considered. When a railroad car collides against a large object, a large impact acts on the railroad car by collision against the object. As an idea for protecting a train crew and passengers on a railroad car from such an impact, the idea of absorbing the energy of impact by positively deforming a portion of the structure of a railroad car exists. It is the idea of separately providing, in the structure of a railroad car, a space in which a train crew and passengers ride on, and which is provided to prevent the structure from being collapsed at the time of collision against an object (hereinafter referred to as "survival zone") and a space for positively deforming the structure of the railroad car to absorb the energy of impact at the time of collision against an object (hereinafter referred to as "crushable zone").

A case where a railroad car collides against a small object, e.g., a case where a stone, a snow mass, a part of a vehicle running in the opposite direction or the like upflung by wind caused by running of the train in the opposite direction collides against the front surface of a car front-end portion will next be considered. In a case where a vehicle collides against such a small flying object, no substantially large impact acts on the vehicle body since the vehicle has a mass overwhelmingly larger than that of the flying object. However, there is a possibility of the flying object piercing through a vehicle structure to injure a driver or a passenger. Regarding collision against a small flying object, therefore, not an energy-absorbing structure such as that described above but a strong structure is provided at the vehicle end at which the driver rides on, thereby preventing intrusion of the flying object. A shielding plate disposed to prevent intrusion of a flying object into the driver's cab in order to save the driver's life will be referred to as a flying object shielding plate.

The body of a railroad car is constituted by an underframe, two side structures, a roof structure and two end structures. Inner beams and side beams are mounted on the underframe to enable the body to have high rigidity. Wiring and piping are secured to lower portion of the underframe. With respect to a group of railway vehicle or railroad cars forming a train in particular, there is a need to consider collision between the train cars in the event of collision of the train, since the plurality of cars are connected to each other to form the train. The underframe of a railroad train is strongly made. Therefore, when bodies of the cars in the train are collided one against another by collision of the car positioned at the front or rear end of the train (the car at each end referred to as "front-end car", hereinafter), the underframes of the cars collide one against another. The underframes are so strong as not to collapse even when they collide one against another and are, therefore, ineffective in reducing the impact.

Railroad trains have therefore been proposed in which an impact energy absorbing device is provided not only on the front-end car but also between each adjacent pair of the cars connected to each other in the train. The impact energy absorbing device is a device in which buckling is caused to absorb impact energy and to thereby reduce the influence of the impact on passengers. A railroad car construction has been proposed in which an impact energy absorbing device of the above-described kind is provided on a front-end portion of the front-end car, and in which impact energy produced at the time of collision is absorbed by a deformation of the device (Japanese Patent Laid-Open No. 7-186951). This impact energy absorbing device (relief device) is constituted by an element having a triangular shape in a plane perpendicular to the direction of action of impactive force, honeycomb panel and other members. A plurality of the above-described relief devices are disposed in parallel to the direction of action of impactive force and disposed one after another along the direction of action of impactive force.

The applicant of the present invention proposed a railway vehicle having an impact relief mechanism which absorbs an impact by buckling at the time of collision (Japanese Patent No. 3725043). The impact relief mechanism is formed of a double-skin hollow shape, i.e., a combination of two parallel plate members connected to each other by a truss and having the shape of a tube rectangular as viewed in section, and has a predetermined length in the axial direction.

Further, the applicant of the present invention proposed an arrangement in which, at least in the underframe of the above-described railway vehicle, the material of members forming opposite ends in the longitudinal direction of the vehicle is soft relative to the material of members closer to a center of the underframe in the longitudinal direction. In this railway vehicle, the influence of impact on a train crew and passengers is reduced as effectively as possible to improve safety even in the event of an unexpected vehicle collision accident or the like.

The applicant of the present invention also paid attention to the fact that the rigidity of corner portions of the impact absorbing structure in the form of a rectangular tube is excessively high in comparison with the other portions, and provided an improved structure such that no truss is provided in the vicinity of the ridge line at each corner portion of the rectangular tubular shape of the impact absorbing structure. The applicant of the present invention then proposed a method of improving the impact absorbing characteristics by reducing the rigidity of the corner portions of the impact absorbing structure in comparison with that of the other portions so that a peak load at the time of collision is reduced (Japanese Patent Laid-Open No. 2005-75255).

The applicant of the present invention also proposed an impact absorbing structure formed by joining four plate members by welding or the like and having the shape of a rectangular tube such as that described above (Japanese Patent Laid-Open No. 2005-75256). In the impact absorbing structure, a plurality of reinforcing plate members are fixed in the space inside the rectangular tube by welding at intervals in the longitudinal direction. The impact absorbing structure buckles to absorb an impact. When the impact absorbing structure in the form of a rectangular tube buckles to absorb an impact, the reinforcing plate members prevent buckling accompanied with excessive deformation to improve the energy absorbing characteristics.

The applicant of the present invention further proposed an impact absorbing structure having the shape of a tube rectangular as viewed in section and formed by connecting four hollow shapes made of an aluminum alloy by welding or the like using the same additional material so that portions of the hollow shapes corresponding to corners are joined to each other (Japanese Patent Laid-Open No. 2005-75293). In each hollow shape, the outer plate and the inner plate are connected to each other by a truss. Since both the hollow shapes and the welded portions are formed of the aluminum alloy, different portions of the structure are uniformly compression-deformed, thus improving the impact absorbing characteristics.

The applicant of the present invention further proposed a railway vehicle in which members along the vehicle longitudinal direction are joined to each other by friction stir welding at least in the underframe to make finer the metallographic structure of portions under friction stir processing so that the energy absorption value of the corresponding portions is increased, and to thereby improve the characteristics of impact absorption at the welded portions considered to be weak in resistance to impact energy (Japanese Patent No. 3725057).

In an impact energy absorbing device and a railway vehicle having the impact energy absorbing device, the product of a deformation (strain) and a force (stress) produced by collision of the impact energy absorbing device corresponds to absorbed energy (work). If all impact energy absorbing devices start deforming in union at the time of collision, a large impactive force is produced and an increased pressure-collapse peak load results. A large pressure-collapse peak load causes a large impact on a train crew and passengers in the case of application of a railway vehicle in particular, which is undesirable. There is, therefore, a subject to reduce the pressure-collapse peak load by slightly shifting the times at which a plurality of energy absorbing members constituting an impact energy absorbing device start deforming respectively at the time of collision.

There is also a problem that if an energy absorbing member constituting an impact energy absorbing device is elongated, full buckling, i.e., bucking by bending of an intermediate portion as a result of application of an impactive load at the time of collision, can occur easily in the energy absorbing member. When full buckling occurs in the energy absorbing member, energy is not sufficiently absorbed. In the case of application to a railway vehicle such as a railroad car in particular, application of a large impact on a train crew and passengers is permitted, which is undesirable. There is, therefore, a subject to sufficiently absorb energy by preventing total buckling of an energy absorbing member at the time of collision and by causing pressure collapse of the energy absorbing member with stability and efficiency.

DE-B-1279709 (Auslegeschrift) shows an impact apparatus in a railway car in which the buffers have deformation bodies. The buffer has behind it two tubular deformation bodies arranged alongside each other between two plates. A guide member is fixed to the front plate and extends through the rear plate into a guide tube.

### SUMMARY OF THE INVENTION

An object of the present invention is to provide a railway vehicle capable of avoiding coincidence between

pressure collapse start times in an impact energy absorbing device at the time of collision to reduce the pressure-collapse peak load and to thereby reduce the intensity of impact. In particular, the present invention aims to provide an impact energy absorbing device capable of reducing loads on the vehicle body, passengers and so on in the case of application to transportation apparatus such as a railway vehicle, and a railway vehicle having the impact energy absorbing device.

To achieve the above-described object, according to the present invention, there is provided, a railway vehicle having an impact energy absorbing device, as set out in claim 1.

In the railway vehicle of the invention, the front ends in the collapse direction of energy absorbing members disposed by being arranged in a direction intersecting the longitudinal direction of the railway vehicle are shifted to plurality of positions. At the time of collision, therefore, the energy absorbing members are successively brought into collision from their front ends with time differences, thus shifting the energy absorbing member collapse start time. As a result, time differences are produced between occurrences of initial collapse peak loads on the energy absorbing members to reduce the peak load in the impact energy absorbing device as a whole.

According to the present invention, there is also provided an impact energy absorbing device having at least one energy absorbing member which pressure-collapses at the time of collision to absorb impact energy, wherein a displacement of the energy absorbing member in a pressure collapse direction when the energy absorbing member pressure-collapses is guided by a slide guide. According to the present invention, there is also provided a railway vehicle having an impact energy absorbing device having at least one energy absorbing member which pressure-collapses at the time of collision to absorb impact energy, wherein a displacement of the energy absorbing member in a pressure collapse direction when the energy absorbing member pressure-collapses is guided by a slide guide. Within the present invention, the railway vehicle is positioned at a front-end or trailing-end position in a train, the railway vehicle having the impact energy absorbing device provided at each of opposite sides in a vehicle width direction in an end region of the railway vehicle.

In the impact energy absorbing device, the displacement of the energy absorbing member in the collapse direction during impact energy absorbing operation with the energy absorbing member is guided by the slide guide. Therefore the energy absorbing member collapses by finely buckling with stability and efficiency instead of buckling in a full-buckling manner. Consequently, the energy absorbing member can sufficiently absorb impact energy.

Also, if the railway vehicle is a front-end vehicle positioned at the front-end or trailing-end position in a train, the probability of large impact at the time of collision is high. However, since the coupling member for coupling the plurality of energy absorbing members to each other is guided in the end region by the slide guide with respect to a vehicle body component portion, the guide function of the slide guide in the front-end vehicle enables the energy absorbing member to finely repeat buckling in a bellows manner to effectively absorb impact energy while avoiding full buckling.

The present invention is arranged as described above, so that the times at which the plurality of energy absorbing members constituting the impact energy absorbing device start pressure collapsing in the event of collision do not coincide with each other; the energy absorbing members start pressure collapsing with differences in time. Therefore, the pressure collapse peak load in the entire impact energy absorbing device is reduced, thereby reducing the intensity of impact. In a railway vehicle such as a railroad car in particular, loads on the vehicle body, passengers and so on can be reduced.

Also, the arrangement of the present invention enables the displacement in the pressure collapse direction of the energy absorbing member constituting the impact energy absorbing device to be guided by the slide guide, so that the energy absorbing member can pressure-collapse with stability and efficiency while avoiding full buckling. As a result, impact energy is sufficiently absorbed by the energy absorbing member. In the case of application to a railway vehicle such as a front-end car in a railroad train in particular, the present invention makes it possible to reduce loads (impacts) on passengers and a train crew or the vehicle body.

Further, the vehicle of the present invention may use a buckling preventing member disposed in the energy absorbing member of the impact energy absorbing device to ensure avoidance of full buckling at the time of collision and to enable the energy absorbing member to pressure-collapse through its entire length in the longitudinal direction with stability and efficiency to sufficiently absorb impact energy, thus reducing the impact received in the event of collision.

### BRIEF DESCRIPTION OF THE DRAWINGS

FIG. 1 is a front view of an end portion of an intermediate vehicle representing a first structure of a railway vehicle described by way of reference and not within the present invention;
FIG. 2 is a sectional side view of the end portion of the intermediate vehicle shown in FIG. 1, taken along line B-B in FIG. 1;
FIG. 3 is a sectional view of an impact energy absorbing device used in the end portion of the intermediate vehicle shown in FIG. 1, taken along line A-A in FIG. 1;
FIG. 4 is a diagram showing another example of the energy absorbing member;
FIG. 5 is a diagram showing still another example of the energy absorbing member;
FIG. 6 is a diagram showing a further example of the energy absorbing member;
FIG. 7 is a diagram showing an example of a combination of a buckling preventing member and a joint plate used in the energy absorbing member;
FIG. 8 is a bottom sectional view of a front-side right half of a front-end vehicle representing an embodiment of the railway vehicle according to the present invention, taken along line Y-Y in FIG. 9;
FIG. 9 is a longitudinal sectional view of the front-end vehicle shown in FIG. 8, taken along line Z-Z in FIG. 8;
FIG. 10 is a transverse sectional view of a portion of the front-end vehicle shown in FIG. 8, taken along line X-X in FIG. 8;
FIG. 11 is a front view of an example of the energy absorbing member;
FIG. 12 is a sectional view showing an example of state in which the energy absorbing is pressure-collapsed; and
FIG. 13 is a graph showing an example of changes in load with respect to the displacement in the impact energy absorbing device at the time of energy absorption according to the present invention.

### DETAILED DESCRIPTION OF THE PREFERRED EMBODIMENT

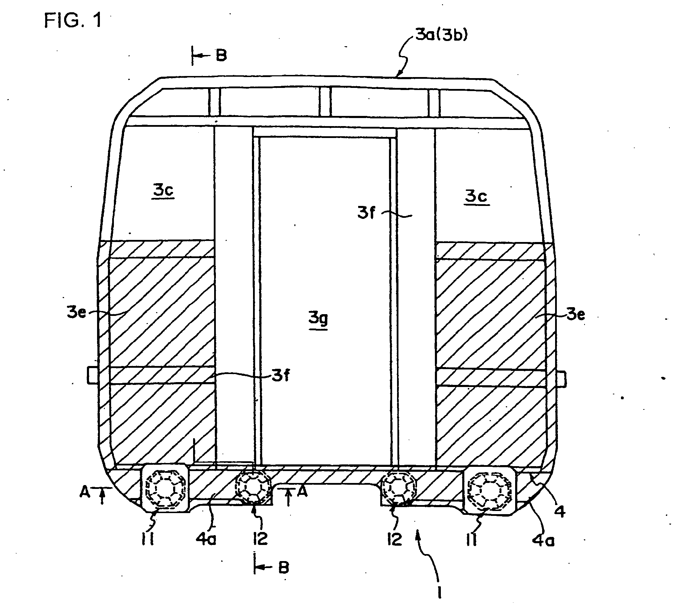

FIGS. 1 to 7 show, as a reference structure not within the present invention, an example of an impact energy absorbing device, and an intermediate vehicle which is a railway vehicle to which the impact energy absorbing device is applied. With respect to the intermediate vehicle, an end structure in which the impact energy absorbing device is mounted is illustrated.

The impact energy absorbing device of the vehicle of this invention, can be used not only in end portions of a front-end railroad car but also in end portions of intermediate cars in a train. The train is formed of the front-end cars at the leading and trailing ends and a required number of intermediate cars. For example, in a case where the front-end car ("front-end car" also denoting the rear-end car as occasion demands) collides against an obstacle or another car for example, collisions occur successively between the front-end car and the intermediate car adjacent to the front end car and between the adjacent pairs of the other intermediate cars. If the impact energy absorbing device is used in each of the end portions of the front-end and intermediate cars, an impact caused by a collision on any of the cars in the train or secondary impacts caused between the intermediate cars can be absorbed by the impact energy absorbing devices.

The structure shown in FIGS. 1 to 3 is an impact energy absorbing device 1 used in a car end structure 3a of the front-end car closer to the intermediate cars and car end structures 3b of the intermediate cars. In some cases, in the car end structures (3b in particular), a driver's seat 3d is provided in spaces 3c provided on opposite sides of a through passage 3g for car-to-car transfer for a train arrangement purpose. For the formation of the driver spaces 3c, frames 3f are disposed so as to surround the spaces 3c. A flying object shielding plate 3e (hatched portions) is provided at the front sides of the driver spaces 3c to protect a train crew member from a flying object such as a pebble. The shielding plate 3e is formed by connecting left and right main plate portions by a lower side portion. In the lower side portion, there are formed holes 3i and 3j through which energy absorbing members 11 and 12 are passed. The car end structures 3a and 3b have substantially the same function as a conventional end structure. The car end structures 3a and 3b are attached to conventional end structures of the car body by suitable fixing means such as welding. A floor surface 3h of the car end structure 3a is substantially flush with a floor surface 4b on an underframe 4 as seen from the car interior side, forming a continuous structure.

In this example, the impact energy absorbing device 1 has a pair of larger energy absorbing members 11 mounted in an end plate 4a of the underframe 4 of the car body respectively in outer positions in the car body width direction, and a pair of smaller energy absorbing members 12 mounted in the end plate 4a respectively in positions closer to a center in the car body width direction by being spaced apart from each other in the car body width direction. Each of the energy absorbing members 11 and 12 is disposed so that its longitudinal direction, i.e., its extension direction, coincides with the longitudinal direction of the entire car body. Front ends of the energy absorbing members 11 and 12 are placed at the body outermost side in the longitudinal direction of the entire car body. Base ends of the energy absorbing members 11 and 12 are assumed to be positions closer to the center of the car in the longitudinal direction. Further, the energy absorbing members 11 and 12 are disposed by being arranged in a direction intersecting the longitudinal direction of the car. That is, the energy absorbing members 11 and 12 are disposed abreast generally in parallel with each other by being arranged in the car width direction. More specifically, the energy absorbing members 11 and 12 are disposed by adjusting their centers to positions equal to each other in height among the car bodies and bilaterally symmetric with each other in the car width direction. The front ends of the energy absorbing members 11 and 12 are respectively covered with end plates 11a and 12a, and end plates 11b and 12b provided on the base ends of the energy absorbing members 11 and 12 are fixed on the end plates 4a of the underframe 4 by fixing members 13 such as bolts and nuts, thus mounting the energy absorbing members 11 and 12 on the car body (underframe 4). The fixing members 13 may be fastening means in any other form and welding may alternatively be performed. The energy absorbing members 11 and 12 are not limited to the illustrated larger and smaller ones. It is apparent that the energy absorbing members 11 and 12 may be of the same type; the inner and outer positions in the car width direction at which the smaller and larger ones are respectively placed may be reversed; or a combination of a larger number of energy absorbing members of various types may be provided.

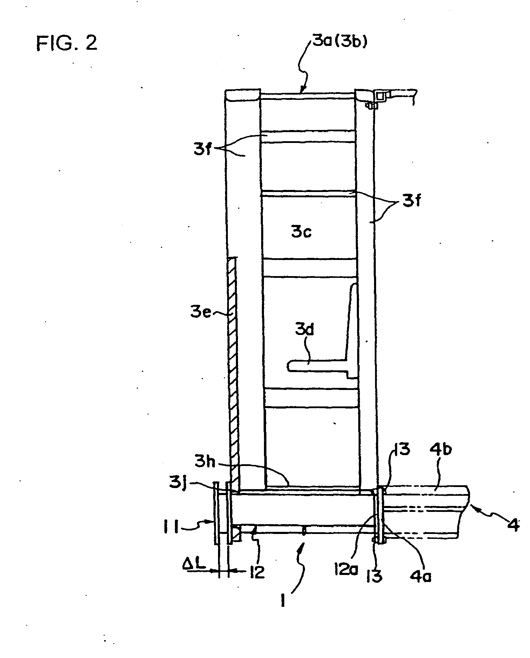

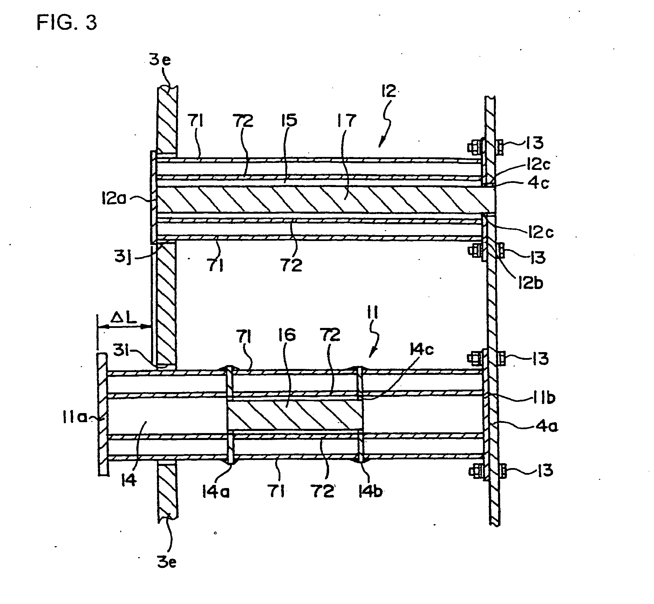

In the structure shown in FIG. 3, the larger energy absorbing members 11 have a size larger in diameter and in length than that of the smaller energy absorbing members 12. The smaller energy absorbing members 12 have such a length that their front ends occupy substantially the same position as the end of car body (the end surfaces of the flying object shielding plates 3e) when the smaller energy absorbing members 12 are mounted on the end plate 4a of the underframe 4. On the other hand, the larger energy absorbing members 11 is constructed so as to be longer than the smaller energy absorbing members 12 by a length ΔL. When the energy absorbing members 11 and 12 are mounted on the end plate 4a of the underframe 4, they are disposed as shown in FIG. 2 in a state of being superposed one on another and as shown side by side in FIG. 3. The larger energy absorbing members 11 protrude forward beyond the end of the car body through a small distance (e.g., about 100 mm). When a large impactive force is applied to the underframe 4 by collision, the underframe 4 can resist the load since the strength of the underframe 4 is high as described above. Thus, the pressure-collapse-direction front ends of the plurality of energy absorbing members are set at different positions in the longitudinal direction of the railway vehicle, although it is not necessarily required that the position of each front end differ from any of the positions of the other front ends.

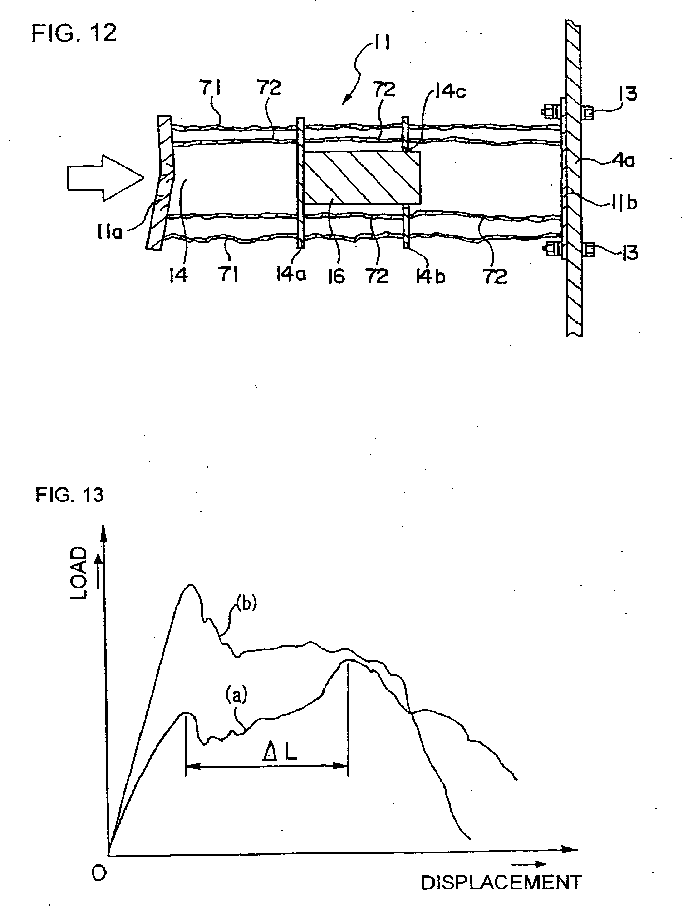

At the time of collision, therefore, an impactive force produced by collision is transmitted among the cars and, if the impact energy absorbing devices 1 are provided so as to face each other in each adjacent pair of the car end structures 3a and 3b of the cars, the impact energy absorbing devices 1 operate. The larger energy absorbing members 11 first collide against each other and start collapsing between each adjacent pair of cars due to the difference (ΔL) between the front end positions of the energy absorbing members 11 and 12 provided on each car. Thereafter, with a small time delay, the smaller energy absorbing members 12 collide against each other and start collapsing. Pressure collapse of the energy absorbing members 11 and 12 will be described. FIG. 12 shows an example of pressure collapse of the energy absorbing members 11 shown in FIG. 3. The attitudes of the cars at the time of occurrence of collision are not strictly the same, depending on whether the rails are straight or curved. With respect to collision between each adjacent pair of cars, however, it may be assumed that the cars collide against each other generally along the longitudinal directions of the cars. In such a situation, the energy absorbing members 11 and 12 are broken in such a manner as to collapse generally straight while keeping alignment of their axes, with recurrence of small buckling of the tubular bodies constituting the absorbing members 11 and 12. The state after pressure collapse is, for example, a contracted bellows-like structure. That is, the energy absorbing members 11 and 12 deform not by bending the whole into generally straight halves having a certain angle therebetween, i.e., full bucking, but in such a manner as to exhibit a bellows-like structure, thus sufficiently absorbing impact energy.

A peak load through each impact energy absorbing device 1 is dispersed by a small difference in collapse start time between the two types of energy absorbing members 11 and 12. Thus, peak loads through the impact energy absorbing devices 1 are reduced to reduce loads on the car bodies, passengers and so on. FIG. 13 is a graph showing dispersion of peak loads. In the conventional energy absorbing member arrangement, although a plurality of energy absorbing members are provided, the front ends of the energy absorbing members are aligned with each other, so that the energy absorbing members start collapsing simultaneously with each other, resulting in occurrence of a considerably high peak load in an initial stage of pressure collapse, as shown in FIG. 13 (see graph curb b). In contrast, in the structure of Figs. 1 to 3 a time difference in peak load generation time is produced by a difference in pressure collapse start time according to the difference ΔL between the positions of the front end portions resulting from the difference between the lengths of the two energy absorbing members 11 and 12. The result is that the load through the energy absorbing members 11 operating earlier exhibits a peak and then decreases temporarily and, thereafter, the load through the energy absorbing members 12 operating subsequently exhibits a peak. In this embodiment, the height of the peak load as a whole can be reduced (see graph curve a) in comparison with the case where the two energy absorbing members 11 and 12 operate at a time simultaneously with each other.

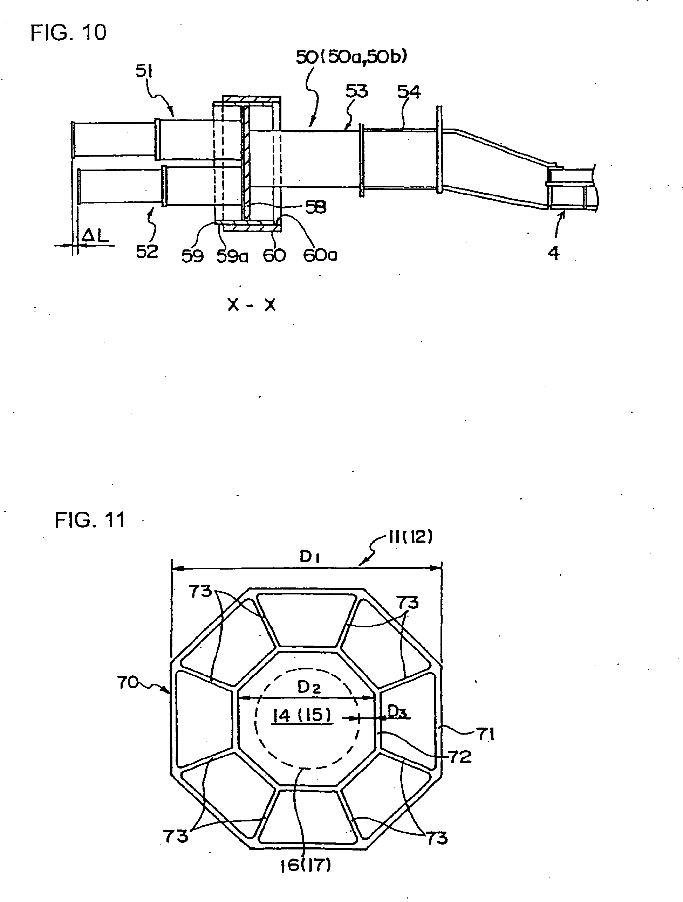

In the illustrated example, the energy absorbing members 11 and 12 have internal structures similar in shape to each other while differing in sectional size. The energy absorbing member 11 (12) constituting one kind of impact energy absorbing device 1 will be described with reference to FIG. 11. Each energy absorbing member 11 (12) has a hollow structure 70 octagonal in section and is formed of an extruded shape made of an aluminum alloy. That is, the energy absorbing member 11 (12) has, as seen in its section, an octagonal outer wall portion 71, an octagonal inner wall portion 72 similar in shape to the outer wall portion 71, and a plurality of radial wall portions 73 connecting the apexes of the two octagonal wall portions 71 and 72. An internal space octagonal in section is formed inside the inner wall portion 72, while trapezoidal inner spaces sectioned by the radial wall portions 73 are formed side by side in an annular arrangement between the outer wall portion 71 and the inner wall portion 72. The octagonal internal space in each energy absorbing member 11 (12) is an accommodation space 14 (15) in which a buckling preventing member 16 (17) can be inserted. In the example shown in FIG. 11, the energy absorbing member 11 (12) is a hollow structure 70 having an octagonal sectional shape, but the sectional shape is not limited to this. A hollow member having a suitable sectional shape other than the octagonal shape, e.g., a tube having a square sectional shape or a tube having a circular sectional shape may alternatively be used. The inner and outer wall portions can be connected to each other by a plurality of ribs in such a manner as to form a truss structure for example. The outside diameter D1 of the energy absorbing member 11 (12) is 180 to 210 mm, while the inside diameter D2 of the inner wall portion 72 is about 120 mm.

As shown in FIG. 3, buckling preventing members 16 and 17 are inserted in the octagonal spaces 14 and 15, respectively, inside the energy absorbing members 11 and 12. (The buckling preventing member is a member for preventing full buckling of the energy absorbing member, and "buckling preventing member" denotes a full buckling preventing member. In the following, however, the full buckling preventing member will be referred to simply as "buckling preventing member".) The buckling preventing members 16 and 17 limit deformation of the energy absorbing members 11 and 12 so that the energy absorbing members 11 and 12 are pressure-collapsed in the axial direction into the shape of a bellows. That is, the buckling preventing members 16 and 17 are inserted in the energy absorbing members 11 and 12 to prevent each energy absorbing member from deforming by largely bending an intermediate portion, i.e., from buckling in a full buckling manner to impair the energy absorbing member function in a shorter time period.

Each of the buckling preventing members 16 and 17 may be a cylindrical member made of an aluminum alloy. The lengths of the buckling preventing members 16 and 17 can be selected as required. The buckling preventing members 16 and 17 may be made of a material such as a fiber-reinforced plastic (FRP) in place of an aluminum alloy. That is, the buckling preventing members 16 and 17 have a flexural rigidity substantially higher than that of the energy absorbing members 11 and 12, but their rigidity may be lower than a metal product such as iron. The buckling preventing members 16 and 17 may have a flexural rigidity sufficient for limiting deformation of the energy absorbing members 11 and 12 so that the energy absorbing members 11 and 12 are pressure-collapsed into a bellows-like shape. The buckling preventing members 16 and 17 may be any solid members or hollow tubular members if they have the necessary rigidity. While the length of the buckling preventing member 16 provided in the energy absorbing member 11 shown in FIG. 3 is set shorter than the length of the buckling preventing member 17 provided in the energy absorbing member 12 (longer than the length of the energy absorbing member 12), the length of the buckling preventing member 17 may be differently selected as desired. This will be made clear below.

In the energy absorbing member 11 shown in FIG. 3, the buckling preventing member 16 disposed at an intermediate position in the longitudinal direction. If the length of the energy absorbing member 11 is increased, joint plates 14a and 14b may be added by fillet welding or some other means (the energy absorbing member 11 is partitioned into a plurality of sections by joint plates 14a and 14b). The buckling preventing member 16 provided in the energy absorbing member 11 is fixed on one of the joint plate 14a on the front end side and the joint plate 14b on the base end side, and a hole 14c is formed in the other of the joint plates 14a and 14b so as to enable passage of the buckling preventing member 16. The buckling preventing member 16 is disposed so that a suitable spacing is set between the bucking preventing member 16 and the inner wall portion 72 and between the bucking preventing member 16 and the hole 14c. When the energy absorbing member 11 is compressed, the bucking preventing member 16 moves axially relative to the energy absorbing member 11 to allow the energy absorbing member 11 to be deformed into a bellows-like shape. The gap between the bucking preventing member 16 and the inner wall portion 72 is set to such a value as to avoid hindering inward deformation of the inner wall portion 72 in deforming into a bellows-like shape. That is, a gap of about 15 mm, as represented by a dimension D3 in FIG. 11, is formed between the bucking preventing member 16 (17) and the inner wall portion 72 to provide a total clearance of 30 mm on the opposite sides of the buckling member 16 (17). A joint plate 14b side end portion of the buckling preventing member 16 may be inserted in the hole 14c of the joint plate 14c. If the energy absorbing member 11 is of a structure having an end portion of the buckling preventing member 16 inserted in the hole 14c of the joint plate 14b, the hole 14c serves as a guide for the buckling preventing member 16 to enable the buckling preventing member 16 to move smoothly in the longitudinal direction of the car body. In this structure, when an impact accompanying a collision acts on the energy absorbing member 12, the energy absorbing member 11 starts buckling. Even if the energy absorbing member 11 starts bending angularly in a full buckling manner at a center in the longitudinal direction of the energy absorbing member 11, the buckling preventing member 16 prevents the energy absorbing member 11 from deforming in this manner, thus enabling the entire energy absorbing member 11 to deform into a bellows-like shape.

Referring to FIG. 3, one buckling preventing member 17 is inserted in the space 15 inside the energy absorbing member 12 and fixed to the end plate 12a by welding. The rear end of the buckling preventing member 17 is disposed by being passed through a hole 4c formed in the end plate 4a of the underframe. When an impact acts on the energy absorbing member 12 to cause buckling of the same, the buckling preventing member 17 moves axially relative to the energy absorbing member 12 to allow the energy absorbing member 12 to be deformed into a bellows-like shape while preventing full buckling of the energy absorbing member 12.

The hole 4c in the end plate 4a of the underframe serves as a guide for the buckling preventing member 17 to enable the energy absorbing member 12 to deform smoothly into a bellows-like shape, as does the hole 14c in the joint plate 14b. It is desirable to secure a clearance as a gap between the inner wall portion 72 and the buckling preventing member 17 in the energy absorbing member 12 such as to enable the inner wall portion 72 to deform into a bellows-like shape. As described above, the buckling preventing member 17 itself does not substantially contribute to absorption of energy, but has the function of enabling the energy absorbing member 12 to deform into a bellows-like shape.

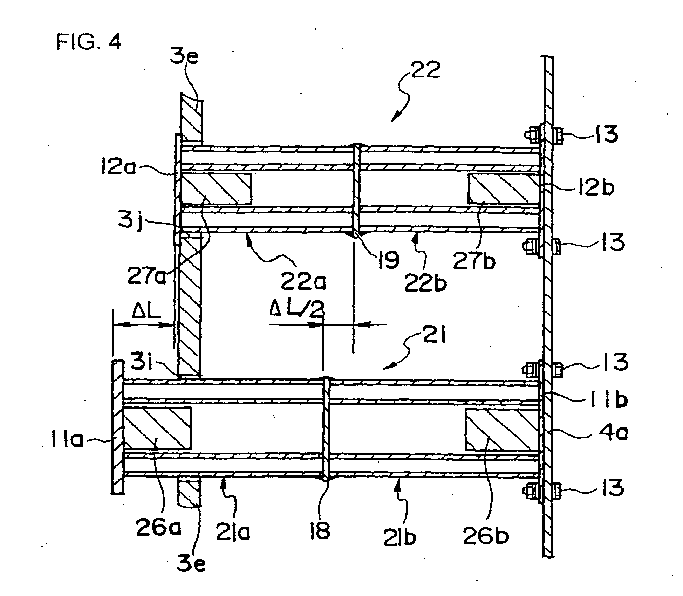

FIGS. 4 to 7 show various modified examples of combinations of buckling preventing members and joint plates. FIG. 4 shows a case where the length of an energy absorbing member 22 is shorter than that of an energy absorbing member 21. The energy absorbing members 21 and 22 are a modified example of the energy absorbing members 11 and 12 shown in FIG. 3. In the energy absorbing members 21 and 22, buckling preventing members are respectively divided into pairs of front and rear buckling preventing members 26a and 26b, and 27a and 27b. Each of the energy absorbing members 21 and 22 is formed as one integral body by bringing the front and rear absorbing member portions 21a and 21b or 22a and 22b into abutment on a joint plate 18 or 19 and fixing them to the joint plate 18 or 19 by welding or the like. In other respects, the construction is the same as that of the energy absorbing member 11 shown in FIG. 3. Therefore the further description of the construction will not be repeated. Buckling preventing members 26a and 26b (27a and 27b) are fixed by welding to outer ends in the longitudinal direction. That is, the buckling preventing member 26a (27a) is fixed to the end plate 11a (12a) on the front end side of the energy absorbing member 21 (22) by welding and the buckling preventing member 26b (27b) is fixed to the end plate 11b (12b) on the base end side of the energy absorbing member 21 (22) by welding. The ends of the buckling preventing members 26a and 26b (27a and 27b) on the joint plate 18 (19) side are in a free state with respect to the energy absorbing member 21 (22). In this arrangement, the buckling preventing members 26a and 26b (27a and 27b) are in the fixed mounted positions with respect to the absorbing member portions 21a and 21b (22a and 22b) and do not substantially contribute to energy absorption by deformation, but prevent full buckling of the energy absorbing member 21 (22) and enable energy absorption by pressure collapse of the energy absorbing member 21 (22). That is, at the time of collision, an impact acting on the energy absorbing member 21 does not necessarily coincide with the axial direction of the energy absorbing member. If the impact direction is different from the axial direction of the energy absorbing member, a component perpendicular to the axial direction works. In this situation, there is a possibility of the energy absorbing member 21 being deformed by being bent at each of the joint to the end plate 11a and the joint to the end plate 11b. The buckling preventing members 26a and 26b are then provided on the end plates 11a and 11b to prevent the above-described bending deformation and to thereby enable the energy absorbing member to deform smoothly into a bellows-like shape in the structure.

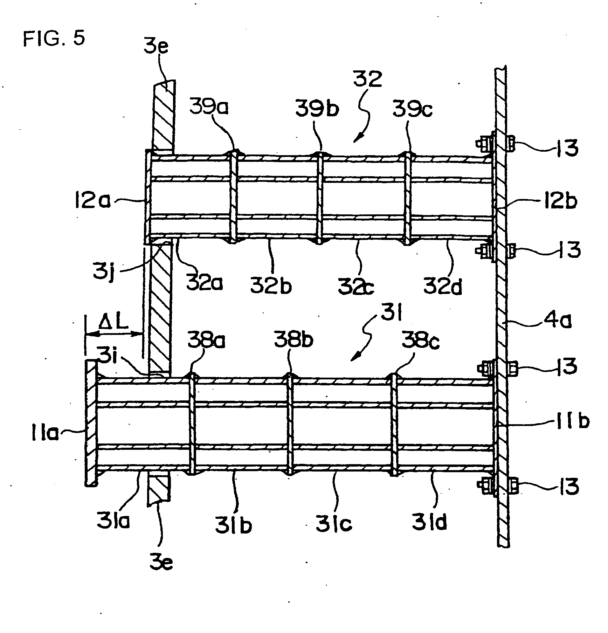

FIG. 5 shows energy absorbing members 31 and 32 in which additional joint plates are provided. In the energy absorbing members 31 and 32, a group of joint plates 38a, 38b, and 38c, and a group of joint plates 39a, 39b, and 39c are respectively provided at positions corresponding to 25%, 50% and 75% of the entire length to divide the entire length into four equal lengths. More specifically, each of the energy absorbing members 31 and 32 is divided into four energy absorbing member portions 31a to 31d or 32a to 32d, which are brought into abutment on the joint plates 38a to 38c or 39a to 39c and their entire peripheries are fixed on the same by fillet welding externally performed thereon. The joint plates including the added ones have a thickness of about 10 mm and made of an aluminum alloy. The positions of the joint plates 39a to 39c of the adjacent energy absorbing member 32 recede relative to the positions of the joint plates 38a to 38c of the energy absorbing member 31. That is, the length of each of the absorbing member portions 32a to 32d is shorter by ΔL/4 than that of each of the absorbing member portions 31a to 31d. It is not necessarily required that the joint plates be disposed at such positions that the energy absorbing member is divided into accurately equal parts. The joint plates may be disposed at division positions selected as desired, provided that the division positions are shifted from each other between the energy absorbing members 31 and 32. The length of each of the absorbing member portions 31a to 31d in the longitudinal direction of the car is substantially equal to the size in the width direction, so that bending deformation of each absorbing member in a single state does not occur easily in the structure. Therefore the energy absorbing member 31 does not easy buckle in a full buckling manner; it can deform smoothly into a bellows-like shape and can sufficiently absorb energy.

Thus, the positions of the joint plates 39a to 39c recede relative to the positions of the joint plates 38a to 38c, so that the maximum load can be shifted in comparison with the case where these positions coincide with each other.

Ideally speaking, the positions are shifted according to progress in pressure collapse in order of 31a → 31b → 31c → 31d.

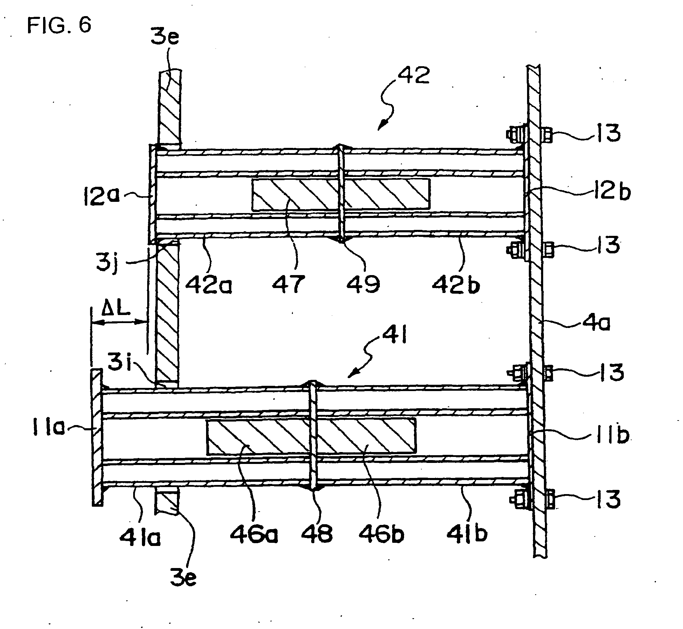

FIG. 6 is a diagram showing another example of energy absorbing members: energy absorbing members 41 and 42 using buckling preventing members 46a, 46b, 47a, and 47b and joint plates 48 and 49. In the example shown in FIG. 6, each of the joint plates 48 and 49 is provided at a positions corresponding to 50% of the entire length to divide the entire length into two equal lengths. More specifically, each of the energy absorbing members 41 and 42 is divided into two energy absorbing member portions 41a and 41b or 42a and 42b, which are brought into abutment on the joint plates 48 or 49 and their entire peripheries are fixed on the same by fillet welding externally performed thereon. The joint plates 48 and 49 have a thickness of about 10 mm and made of an aluminum alloy. Also in this example, it is not necessarily required that each of the joint plates 48 and 49 be disposed at such a position that the energy absorbing member is divided into accurately equal two parts. The joint plates may be disposed at a position such as to divide the energy absorbing member into two parts approximately equal to each other, and it is not necessary to adhere to any position section method.

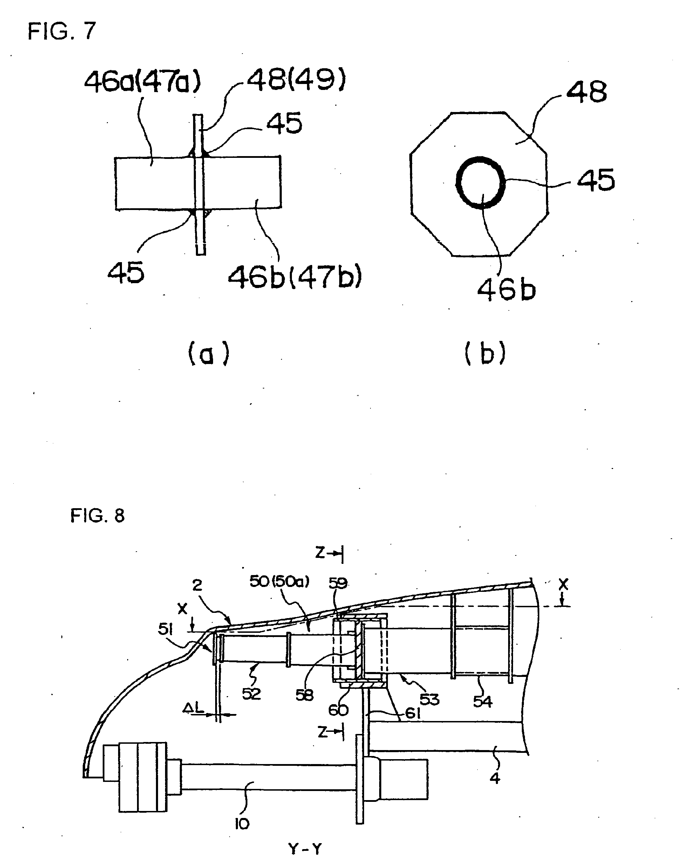

FIGS. 7(a) and 7(b) show an example of a combination of buckling preventing members 46a and 46b and a joint plate 48 used in an energy absorbing member. FIG. 7(b) is a right side view of FIG. 7(a). In the energy absorbing members 41 and 42 shown in FIG. 6, front and rear energy absorbing portions 41a and 41b and 42a and 42b are brought into abutment on the joint plate 48 and 49 and their entire peripheries are fixed on the same by fillet welding 45 externally performed thereon. As shown in FIGS. 7(a) and 7(b), the buckling preventing members 46a and 46b (47a and 47b) are fixed on the joint plate 48 (49) at an intermediate position by fillet welding 45 externally performed thereon. Thus, the buckling preventing members 46a, 46b, 47a, and 47b and the joint plates 48 and 49 are provided in units to facilitate handling in storage, transport, assembly and so on. Each of the buckling preventing members 46a, 46b, 47a, and 47b has been shown as a cylinder as a whole, and each of the joint plates 48 and 49 has been shown as an octagonal plate. Each buckling preventing plate and each joint plate, however, are not limited to the described types. Each of the buckling preventing members 46a, 46b, 47a, and 47b may have the shape of a rod or a tube circular or rectangular in section, and each of the joint plates 48 and 49 may have the shape of a circular or rectangular plate or any other shape.

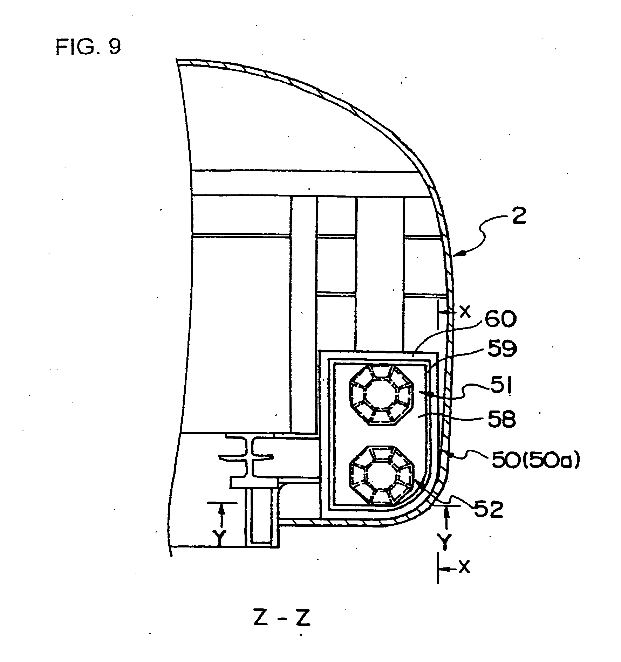

An impact energy absorbing device in a front-end car which is a railway vehicle will be described as an embodiment of the present invention with reference to FIGS. 8 to 10.

A front-end portion 2 of the front-end car has a curved surface convex in the frontward direction. An impact energy absorbing device is disposed at the rear end of the front-end car and at the front end of an intermediate car, respectively. An impact energy absorbing device 50 which absorbs part of impact energy generated at the time of collision with an obstacle or the like is disposed in the front end portion 2. A coupler 10 is provided at the foremost end of the front end portion 2 of the front-end car.

As shown in FIGS. 8 to 10, impact energy absorbing devices 50 (50a) are mounted in a front-end region, i.e., a predetermined region in the longitudinal direction of the car body in the front-end car, while being spaced apart from each other in the width direction of the car body. More specifically, impact energy absorbing devices 50a and 50b identical in structure to each other are symmetrically disposed at left and right sides of the car body in the width direction. In the figures, only the device on one side is shown, illustration of the other side is omitted. Each of the impact energy absorbing devices 50a and 50b on the opposite sides is constructed in upper and lower two stages. In the upper and lower stages, a first energy absorbing member 51 and a second energy absorbing member 52 which absorb impact energy by pressure-collapsing at the time of collision are respectively disposed at the front end side. Each of the first energy absorbing member 51 and the second energy absorbing member 52 is a structural body similar to that in the structure of Figs. 1 to 3, i.e, a tubular structural body having a hollow structure octagonal in section as shown in FIG. 11. Each energy absorbing member is disposed so that the axis of the tube is parallel to the car longitudinal direction (front-rear direction and traveling direction). Thus, the impact energy absorbing devices 50a and 50b on the opposite sides as a whole have a total of four energy absorbing members: the first and second energy absorbing members 51 and 52 extending toward the car front end.

The first energy absorbing member 51 and the second energy absorbing member 52 constructed in upper and lower two stages are mounted on a common supporting plate 58 at their one end in the direction of pressure collapse, i.e., the end closer to a center in the car longitudinal direction. The two energy absorbing members 51 and 52 are connected to one common third energy absorbing member 53 at the rear end of the supporting plate 58 (an end closer to the center in the car longitudinal direction). A rear portion (an end closer to the center in the car longitudinal direction) of the third energy absorbing member 53 is connected to the underframe 4 through a car body structural frame 54. In the first to third energy absorbing members 51 to 53, the sectional area of the absorbing member becomes larger along the rearward direction (toward the center in the car longitudinal direction).

The common supporting plate 58 is fixed on a guide tube 59 having a peripheral edge generally in the form of a rectangular tube as a whole. An outer peripheral surface 59a of the guide tube 59 is slidably fitted to an inner surface 60a of a guide tube box 60 mounted on the car body. At the time of collision, the first and second energy absorbing members 51 and 52 first deform and pressure-collapse to absorb a predetermined amount of energy, the third energy absorbing member 53 thereafter starts deforming and moves toward the rear of the car, with the guide tube 59 guided inside the guide tube box 60 together with the common supporting plate 58. If the entire energy produced by collision is absorbed by pressure collapse of the first and second energy absorbing members, the third energy absorbing member does not deform. Since the first energy absorbing member 51 and the second energy absorbing member 52 are guided by the inner surface 60a of the guide tube box 60, they can perform the impact energy absorbing function through the entire length without buckling at an intermediate portion (a portion at the guide tube box 60). The guide tube 59 and the guide tube box 60 constitute the slide guide in the present invention. The guide tube box 60 is provided at the front end of the underframe 4. A driver's compartment exists at the rear of the guide tube box 60. The front end of the driver's compartment is covered with a flying object shielding plate 61. The guide tube box 60 can be said to be an opening in the flying object shielding plate 61. The first to third energy absorbing members 51, 52, and 53 can continuously perform the impact energy absorbing function without bending at an intermediate portion in a full buckling manner.

As shown in FIG. 10, the collision direction front end positions of the first energy absorbing member 51 and the second energy absorbing member 52 are shifted to a plurality of positions, as in the case of the impact energy absorbing device disposed at the car ends. That is, the first and second energy absorbing members 51 and 52 slightly differ in length in the collision direction. In the state of being supported on the common supporting plate 58, the first energy absorbing member 51 has its front end positioned slightly shifted forward by ΔL (e.g., about 100 mm) relative to the front end position of the second energy absorbing member 52. At the time of collision of the front-end car, the first energy absorbing member 51 starts pressure-collapsing earlier than the second energy absorbing member 52 due to the difference (ΔL) between the front end positions. By this slight difference in collapse start time, the peak load is dispersed. In this way, the collapse peak load through the energy absorbing members 51 to 52 are reduced, thereby reducing loads on the car body, passengers and so on. It is apparent that the structure of the energy absorbing members 51 to 54 may be formed on the basis of the structure of the energy absorbing members shown in FIGS. 1 to 7.

## Claims

1. A railway vehicle comprising an impact energy absorbing device (50) having a plurality of energy absorbing members (51, 52, 53) which pressure-collapse at the time of collision to absorb impact energy,
wherein each said energy absorbing member (51, 52, 53) has its pressure collapse direction aligned with a car longitudinal direction of the railway vehicle; and
the plurality of the energy absorbing members (51, 52, 53) are coupled to each other by a coupling member in the form of a supporting plate (58), coupling the plurality of energy absorbing members in the pressure collapse direction;
wherein displacement of the energy absorbing members (51, 52, 53) in the pressure collapse direction when the energy absorbing members pressure-collapse is guided by a slide guide (60) provided on the car body, the slide guide (60) guiding the supporting plate (58) with the guide direction aligned with the car longitudinal direction of the railway vehicle; wherein a guide tube (59) is attached to the periphery of the supporting plate, and the guide tube (59) is fitted in the slide guide which is a guide tube box (60) with the tube axis direction of the guide tube (59) aligned with a guide direction of the guide tube box (60), the guide tube (59) having an outer peripheral surface (59a) slidably fitted to the inner surface (60a) of the guide tube box (60);
**characterized in that**:
said energy absorbing members are first and second energy absorbing members (51, 52) which are mounted on the supporting plate (58) at their ends closer to the centre of the car in the car longitudinal direction so as to extend alongside each other in the direction away from said centre of the car, and a third energy absorbing member (53) mounted at the side of the supporting plate (58) closer to said centre of the car and having a portion closer to said centre of the car connected to an underframe (4) of the vehicle through a car body structural frame (54), and
the first and second energy absorbing members (51, 52) differ in length in the collision direction, and the first energy absorbing member (51) has its front end, which is its end more remote from said centre of the car, positioned forward relative to the front end portion of the second energy absorbing member (52).

2. The railway vehicle according to claim 1,
wherein each energy absorbing member (51, 52, 53) is a tubular member having an internal hollow structure.

3. The railway vehicle according to claim 1 or 2,
wherein the impact energy absorbing device (50) is disposed in an end region of a front-end vehicle or a trailing-end vehicle in a train.

## Patentansprüche

1. Schienenfahrzeug mit einer Stoßenergie-Absorbiereinrichtung (50) mit mehreren Energieabsorbierelementen (51, 52, 53), die bei einer Kollision unter Druck kollabieren und dabei Stoßenergie absorbieren,
wobei die Druck-Kollabierrichtung jedes der Energieabsorbierelemente (51, 52, 53) mit der Wagenlängsrichtung des Schienenfahrzeugs fluchtet und
die mehreren Energieabsorbierelemente (51, 52, 53) miteinander über ein Koppelelement in Form einer Stützplatte (58) gekoppelt sind, die die mehreren Energieabsorbierelemente in der Druck-Kollabierrichtung koppelt,
wobei dann, wenn die Energieabsorbierelemente (51, 52, 53) unter Druck kollabieren, ihre Verschiebung in der Druck-Kollabierrichtung durch eine an dem Fahrzeugkörper vorgesehene Gleitführung (60) geführt ist, die die Stützplatte (58) so führt, dass die Führungsrichtung mit der Wagenlängsrichtung des Schienenfahrzeugs fluchtet, wobei am Rand der Stützplatte ein Führungsrohr (59) angebracht ist, das in die Gleitführung eingesetzt ist, und wobei die Gleitführung ein Führungsrohrgehäuse (60) ist und die Richtung der Rohrachse des Führungsrohrs (59) mit der Führungsrichtung des Führungsrohrgehäuses (60) fluchtet, wobei das Führungsrohr (59) eine äußere Umfangsfläche (59a) aufweist, die an der Innenfläche (60a) des Führungsrohrgehäuses (60) gleitend eingesetzt ist,
**dadurch gekennzeichnet, dass**
die Energieabsorbierelemente ein erstes und ein zweites Energieabsorbierelement (51, 52), die an der Stützplatte (58) an ihren der Wagenmitte in Wagenlängsrichtung benachbarten Enden so montiert sind, dass sie in Richtung von der Wagenmitte weg nebeneinander verlaufen, sowie ein drittes Absorbierelement (53) sind, das an der der Wagenmitte benachbarten Seite der Stützplatte (58) montiert ist und mit einem der Wagenmitte benachbarten Teil über einen Wagenkörper-Aufbaurahmen (54) mit einem Unterrahmen (4) verbunden ist, und
das erste und das zweite Energieabsorbierelement (51, 52) in der Kollisionsrichtung längenmäßig verschieden sind, wobei das von der Wagenmitte abgewandte vordere Ende des ersten Energieabsorbierelements (51) gegenüber dem vorderen Endabschnitt des zweiten Energieabsorbierelements (52) weiter vorne liegt.

2. Schienenfahrzeug nach Anspruch 1, wobei jedes Energieabsorbierelement (51, 52, 53) ein Rohrelement mit hohlem Innenaufbau ist.

3. Schienenfahrzeug nach Anspruch 1 oder 2, wobei die Stoßenergie-Absorbiereinrichtung (50) in einem Endbereich des ersten oder des letzten Wagens eines Zuges angeordnet ist.

## Revendications

1. Véhicule ferroviaire comportant un dispositif d'absorption d'énergie de choc (50) ayant une pluralité d'éléments d'absorption d'énergie (51, 52, 53) lesquels s'écrasent sous l'effet de la pression au moment de la collision pour absorber l'énergie de choc,
dans lequel chacun desdits éléments d'absorption d'énergie (51, 52, 53) a sa direction d'écrasement sous l'effet de la pression alignée sur une direction longitudinale de voiture du véhicule ferroviaire ; et
la pluralité d'éléments d'absorption d'énergie (51, 52, 53) sont couplés les uns aux autres par l'intermédiaire d'un élément de couplage sous la forme d'une plaque de support (58), couplant la pluralité d'éléments d'absorption d'énergie dans la direction de l'écrasement sous l'effet de la pression,
dans lequel le déplacement des éléments d'absorption d'énergie (51, 52, 53) dans la direction de l'écrasement sous l'effet de la pression lorsque les éléments d'absorption d'énergie sont écrasés sous l'effet de la pression est guidé par un guide à coulisse (60) agencé sur le corps de véhicule, le guide à coulisse (60) guidant la plaque de support (58) avec la direction de guidage alignée sur la direction longitudinale de la voiture du véhicule ferroviaire ; dans lequel un tube de guidage (59) est fixé à la périphérie de la plaque de support, et le tube de guidage (59) est ajusté dans le guide à coulisse lequel est un cadre de tube de guidage (60) ayant la direction d'axe de tube du tube de guidage (60) alignée sur une direction de guidage du cadre de tube de guidage (60), le tube de guidage (59) ayant une surface périphérique extérieure (59a) ajustée à coulissement dans la surface intérieure (60a) du cadre de tube de guidage (60),
**caractérisé en ce que** :
lesdits éléments d'absorption d'énergie sont des premier et deuxième éléments d'absorption d'énergie (51, 52) lesquels sont montés sur la plaque de support (58) à leurs extrémités plus proches du centre de la voiture dans la direction longitudinale de voiture de manière à s'étendre l'un à côté de l'autre dans la direction opposée audit centre de la voiture, et un troisième élément d'absorption d'énergie (53) monté du côté de la plaque de support (58) plus proche dudit centre de la voiture et ayant une partie plus proche dudit centre de la voiture reliée à un sous-châssis (4) du véhicule par un châssis structurel de corps de voiture (54), et
les premier et deuxième éléments d'absorption d'énergie (51, 52) sont d'une longueur différente dans la direction de collision, et le premier élément d'absorption d'énergie (51) a son extrémité avant, laquelle est son extrémité la plus éloignée dudit centre de la voiture, positionnée vers l'avant par rapport à la partie d'extrémité avant du deuxième élément d'absorption d'énergie (52).

2. Véhicule ferroviaire selon la revendication 1,
dans lequel chaque élément d'absorption d'énergie (51, 52, 53) est un élément tubulaire ayant une structure creuse interne.

3. Véhicule ferroviaire selon la revendication 1 ou 2, dans lequel le dispositif d'absorption d'énergie de choc (50) est disposé dans une région d'extrémité d'un véhicule de tête ou d'un véhicule de queue dans un train.
